# EUROPEAN PATENT APPLICATION

(11) **EP 3 113 480 A1**
(43) Date of publication of application: **04.01.2017**
(21) Application number: 14884110.9
(22) Date of filing: 04.12.2014
(51) Int. Cl.: H04N 5/232, G06T 5/00, H04N 5/225

(54) **IMAGING APPARATUS**

(30) Priority: 28.02.2014 JP 2014037859
(71) Applicant: Panasonic Intellectual Property Management Co., Ltd., Osaka-shi, Osaka 570-6207 (JP)
(72) Inventor: ISHIGAMI, Tomohide, Osaka 540-6207 (JP)
(74) Representative: Vigand, Philippe
(86) International application number: PCT/JP2014/006064
(87) International publication number: WO 2015/128918

(57) **Abstract**

An image capture device of the present disclosure is capable of recording light-ray information including a travelling direction of a light ray and an intensity of the light ray in the travelling direction, and includes: a main lens; an image sensor; microlenses arranged between the main lens and the image sensor; a dirt detector that detects a dirt region on or near the main lens based on an inclination of a straight line on an epipolar plane image that is produced by separating pixels on the image sensor so as to correspond to a plurality of sub-apertures existing on the main lens and arranging the separated pixels in a parallax direction; and a dirt remover that reconstructs an image in the dirt region by using pixels outside the dirt region.

## Description

### TECHNICAL FIELD

The present disclosure relates to a light-field camera that separates rays of light based on direction by microlenses, and records the separated rays of light.

### BACKGROUND ART

In recent years, such cameras that are called light-field cameras or plenoptic cameras have appeared on the market. The light-field camera is configured by integrating an optical system and an image sensor, and is capable of performing a refocusing processing for focusing on a desired position after photographing to produce an image at an arbitrary focal point. An example of the light-field camera is disclosed in NPL 1 of the Non-Patent Literature.

Also, PTL 1 of the Patent Literature discloses an image processing technique in a light-field camera for performing a refocusing processing and a resolution increasing processing concurrently by using image data taken from multiple view points. PTL1 discloses a configuration that prevents an image deterioration caused by the condition that the luminance at the same point on a subject varies depending on the viewpoint or by the condition that the subject does not exist on a virtual plane to be focused.

Also, PTL2 of the Patent Literature discloses an image processing method that involves accurately deciding an unnecessary image component included in a captured image without requiring image capturing multiple times.

### Citation List

### Patent Literatures

PTL 1: Unexamined Japanese Patent Publication No. 2013-110711
PTL 2: Unexamined Japanese Patent Publication No. 2013-179564

### Non-Patent Literature

NPL 1: Ren. Ng, et al., "Light Field Photography with a Hand-Held Plenoptic Camera", Stanford Tech Report CTSR 2005-02

### SUMMARY OF THE INVENTION

The present disclosure provides an image capture device that can remove wide-spread dirt or periodically existing dirt adhered to the main lens or its vicinity.

An image capture device in accordance with the present disclosure is capable of recording light-ray information including a travelling direction of a light ray and an intensity of the light ray in the travelling direction, and includes: a main lens; an image sensor; microlenses arranged between the main lens and the image sensor; a dirt detector that detects a dirt region on or near the main lens based on an inclination of a straight line on an epipolar plane image that is produced by separating pixels on the image sensor so as to correspond to a plurality of sub-apertures existing on the main lens and arranging the separated pixels in a parallax direction; and a dirt remover that reconstructs an image in the dirt region by using pixels outside the dirt region.

An image capture device in accordance with the present disclosure can produce an image from which dirt or the like adhered to the main lens or its vicinity has been removed.

### BRIEF DESCRIPTION OF DRAWINGS

FIG. 1 is a diagram showing a configuration of a conventional light-field camera.
FIG. 2 is a diagram showing a configuration of a light-field camera in accordance with a first exemplary embodiment.
FIG. 3 is a flowchart explaining an operation of a signal processor in accordance with the first exemplary embodiment.
FIG. 4 is a diagram explaining production of an EPI in accordance with the first exemplary embodiment.
FIG. 5 is another diagram explaining production of an EPI in accordance with the first exemplary embodiment.
FIG. 6 is a diagram showing an entire image of an arbitrary sub-aperture image captured by the light-field camera in accordance with the first exemplary embodiment.
FIG. 7 is a diagram showing a plurality of sub-aperture images arranged in the order of parallax, each corresponding to a part around y-coordinate = 90 of the arbitrary sub-aperture image shown in FIG. 6.
FIG. 8 is a diagram showing an EPI generated from a plurality of sub-aperture images in accordance with the first exemplary embodiment.
FIG. 9A is a diagram showing an output image in a case where a dirt removal processing is not carried out in the background art.
FIG. 9B is a diagram showing a reconstructed image obtained by carrying out a dirt removal processing in accordance with the first exemplary embodiment.
FIG. 10A is a diagram showing an example of an EPI in a case where a dirt region on the EPI is narrow.
FIG. 10B is a diagram showing an example of an EPI in a case where a dirt region on the EPI is wide.
FIG. 10C is a diagram showing an example of an EPI in a case where a dirt region appears in a repetitive pattern on the EPI.
FIG. 11 is a diagram explaining a case where a dirt region is larger than a block for calculating a position matching.
FIG. 12 is a diagram showing a case where dirt regions appear in a pattern.

### DESCRIPTION OF EMBODIMENT

Hereinafter, an exemplary embodiment will be described in detail with reference to the accompanying drawings as appropriate. However, unnecessarily detailed description may occasionally be omitted. For example, detailed description of well-known matters and redundant description of substantially the same configuration may occasionally be omitted. This is to avoid the following description from becoming unnecessarily redundant, and to allow any person skilled in the art to easily understand the description.

Also, it should be noted that the following description and the accompanying drawings are provided to allow any person skilled in the art to fully understand the present disclosure, and that it is not intended to limit the subject matter described in the claims by the following description and the accompanying drawings.

### FIRST EXEMPLARY EMBODIMENT

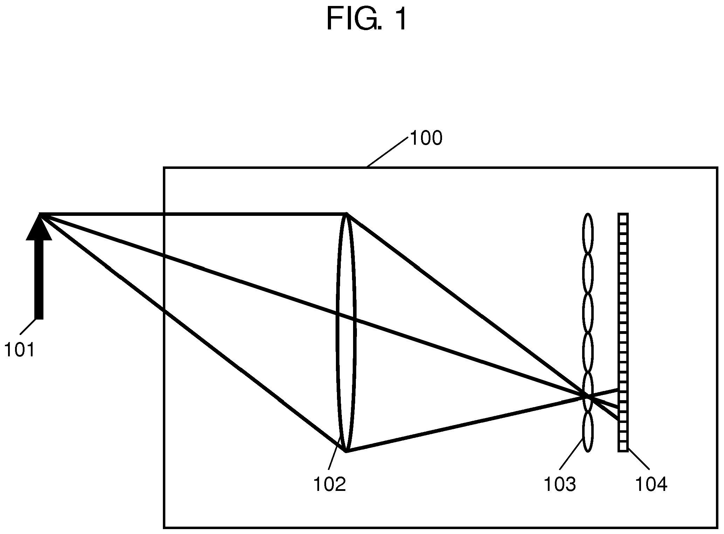

Hereinafter, a first exemplary embodiment will be described with reference to FIGS. 1 to 12.

### 1-1. Problems to Be Solved

First, problems of the conventional light-field cameras will be described. FIG. 1 is a diagram showing a configuration of a conventional light-field camera. Referring to FIG. 1, light-field camera 100 photographs subject 101. Light-field camera 100 is configured by main lens 102, microlens array 103, and image sensor 104. A light ray from subject 101 passes through main lens 102, and then passes through microlens array 103 to be recorded in image sensor 104.

At this time, the light rays are distinguished by their respective directions and recorded in image sensor 104. Therefore, differently from the ordinary cameras, information recorded on a light receiving surface of the image sensor includes not only an intensity of each light ray, but also information of a travelling direction of each light ray. Accordingly, photographed signals can be processed considering the light-ray travelling direction to generate an image at an arbitrary focal point after photographing.

When dirt is adhered to main lens 102 or its vicinity, for example, of the conventional light-field camera 100, an image taken by light-field camera 100 may contain the dirt adhered to main lens 102 or its vicinity to be degraded in picture quality.

### 1-2. Configuration

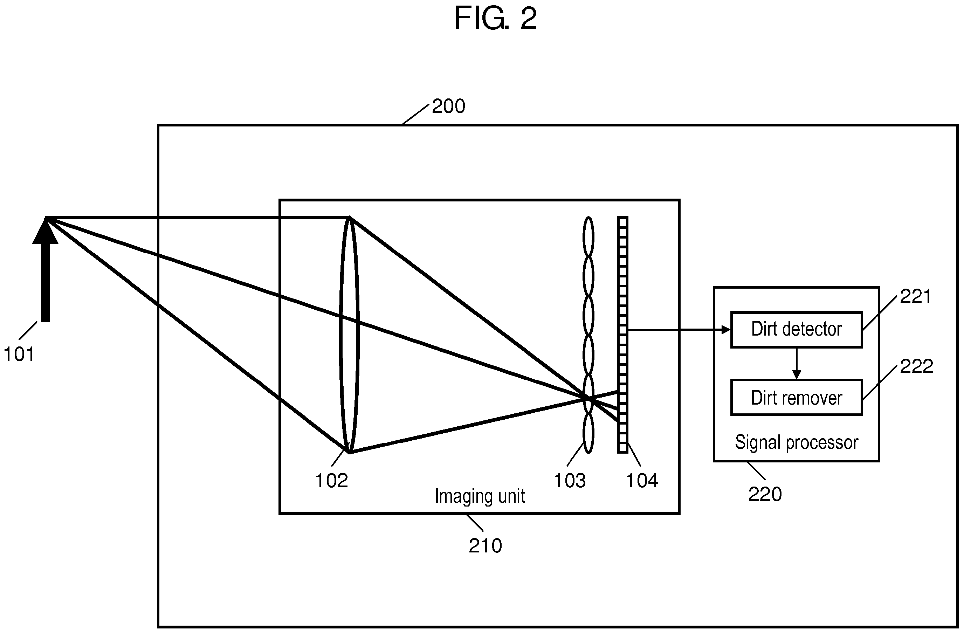

A configuration in accordance with the first exemplary embodiment will be described using a light-field camera as an image capture device. FIG. 2 is a diagram showing a configuration of a light-field camera in accordance with the first exemplary embodiment. Referring to FIG. 2, light-field camera 200 is configured by imaging unit 210, and signal processor 220. Imaging unit 210 is configured by main lens 102, microlens array 103, and image sensor 104. Signal processor 220 is configured by dirt detector 221, and dirt remover 222, and can be implemented by a processor such, for example, as an LSI (Large Scale Integration) circuitry.

Light rays from subject 101 passes through main lens 102, and then passes through microlens array 103 to be recorded in image sensor 104. At this time, each pixel of image sensor 104 includes as concurrently recorded information not only an intensity of a light ray, but also a travelling direction of the light ray.

Each pixel obtained by converting a light ray to an electric signal in image sensor 104 is sent to dirt detector 221. Dirt detector 221 detects a dirt region from an epipolar plane image (EPI) that is obtained by separating pixels of image sensor 104 by a plurality of sub-apertures in main lens 102 into a plurality of sub-aperture images and arranging the plurality of sub-aperture images sequentially in a parallax direction.

Dirt remover 222 receives pixels of image sensors 104 sent from dirt detector 221 and the dirt region detected by dirt detector 221, and reconstructs an image in the dirt region by using pixels outside the dirt region.

### 1-3. Operation

Next, description will be made on removal of dirt on or near main lens 102 of light-field camera 200. The dirt on or near the main lens includes not only dirt which is adhered to main lens 102, such, for example, as a dust or a water spot, but also dirt which is existing outside main lens 102, such, for example, as dirt existing on or near a plastic or glass lens protector provided outside main lens 102 for protecting main lens 102 or on or near a filter. The dirt on or near the main lens further includes an obstacle which is located close to light-field camera 200 between subject 101 and light-field camera 200.

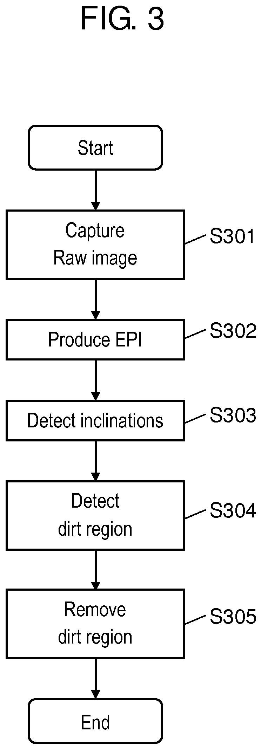

FIG. 3 is a flowchart explaining an operation of signal processor 220.

S301 - Dirt detector 221 obtains from image sensor 104 raw image data composed of pixel values, which are electrical signals converted by image sensor 104 from received rays of light.

S302 - Next, dirt detector 221 produces an EPI by rearranging the pixels in the raw image data.

S303 - Next, dirt detector 221 performs an image processing of the produced EPI such, for example, as the Hough transform to detect inclined lines.

S304 - Next, dirt detector 221 detects a dirt region according to the inclination amount of the detected inclined lines, and outputs the detected dirt region to dirt remover 222. A region that is surrounded by inclined lines may be determined as a dirt region if the inclinations of the inclined lines are equal to or larger than a predetermined value.

S305 - Dirt remover 222 reconstructs an image in the dirt region from the dirt region and the raw image data by using pixels outside the dirt region to output an image from which the dirt region has been removed.

### 1-3-1. Production of an EPI

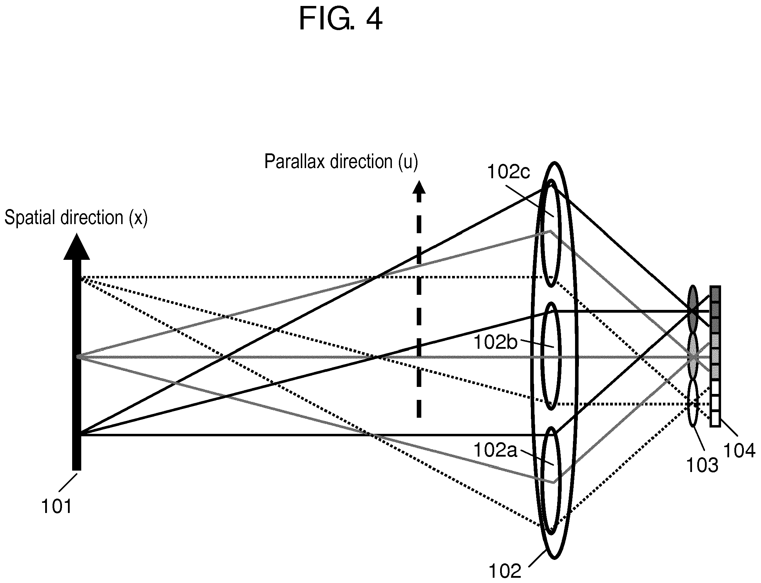

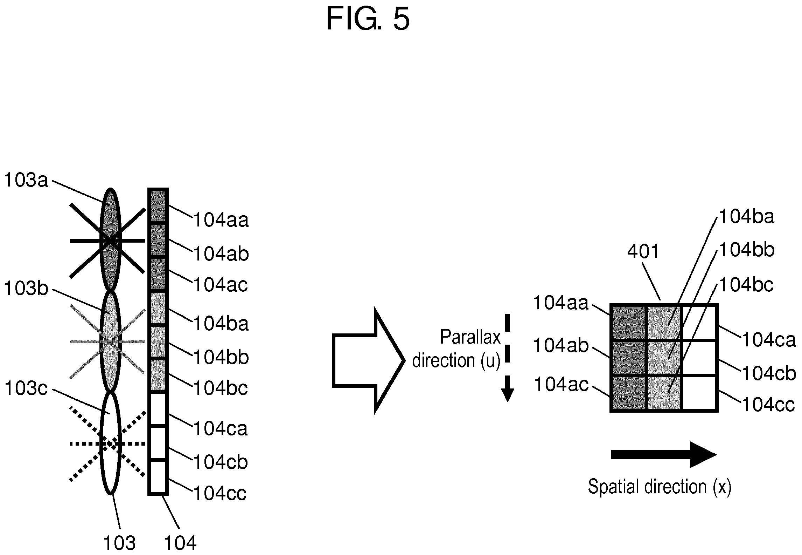

Next, production of an EPI carried out in step S302 will be described in detail. FIG. 4 and FIG. 5 are diagrams explaining production of an EPI.

As shown in FIG. 4, main lens 102 has sub-apertures 102a, 102b and 102c, which are virtual divisions of main lens 102. Also, as shown in FIG. 5, microlens array 103 has microlenses 103a, 103b and 103c. Also, image sensor 104 has image sensors 104aa, 104ab and 104ac, which receive light rays passed through microlens 103a, image sensors 104ba, 104bb and 104bc, which receive light rays passed through microlens 103b, and image sensors 104ca, 104cb and 104cc, which receive light rays passed through microlens 103c. Accordingly, image sensor 104 can record light rays passed through each of microlenses 103a, 103b and 103c in three directions onto three separated pixels.

These three directions of light are information indicating sub-apertures 102a, 102b and 102c, or divisions of main lens 102, from which the three light rays entered, respectively, and thus correspond to positions in a parallax direction. EPI 401 is an image obtained by rearranging pixels of image sensors 104aa, 104ab, 104ac, 104ba, 104bb, 104bc, 104ca, 104cb and 104cc such that pixels in the spatial direction are arranged in the horizontal direction and the pixels in the parallax direction are arranged in the vertical direction.

Here, light rays incident on image sensor 104aa are light rays that have passed through microlens 103a, which are light rays that had passed through sub-aperture 102a in main lens 102.

Similarly, light rays incident on image sensor 104ba are light rays that have passed through microlens 103b, which are light rays that had passed through sub-aperture 102a in main lens 102.

Similarly, light rays incident on image sensor 104ca are light rays that have passed through microlens 103c, which are light rays that had passed through sub-aperture 102a in main lens 102.

Accordingly, an image, or a sub-aperture image, constructed from light rays passed through sub-aperture 102a in main lens 102 can be composed by collecting pixels located in a region upper than a center of each of microlenses 103a, 103b and 103c. At this time, positions of microlenses 103a, 103b and 103c directly become image coordinates of the sub-aperture images and correspond to the positions in the spatial direction.

Similarly, a sub-aperture image constructed from light rays passed through sub-aperture 102b in main lens 102 can be composed by collecting pixels located at the center of each of microlenses 103a, 103b and 103c, and a sub-aperture image constructed from light rays passed through sub-aperture 102c in main lens 102 can be composed by collecting pixels located in a region lower than the center of each of microlenses 103a, 103b and 103c.

Although the EPI has been described above in a case where main lens 102 has three sub-apertures as shown in FIG. 4, the number of sub-apertures may not be limited to three. The number of sub-apertures may be two or more.

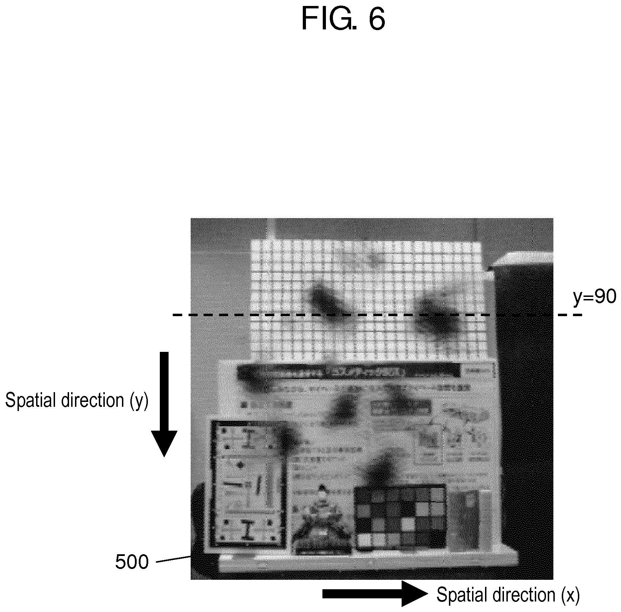

FIG. 6 is a diagram showing an entire image of arbitrary sub-aperture image 500 captured by light-field camera 200. In FIG. 6, an x-axis indicates a spatial direction, and a y-axis indicates another spatial direction.

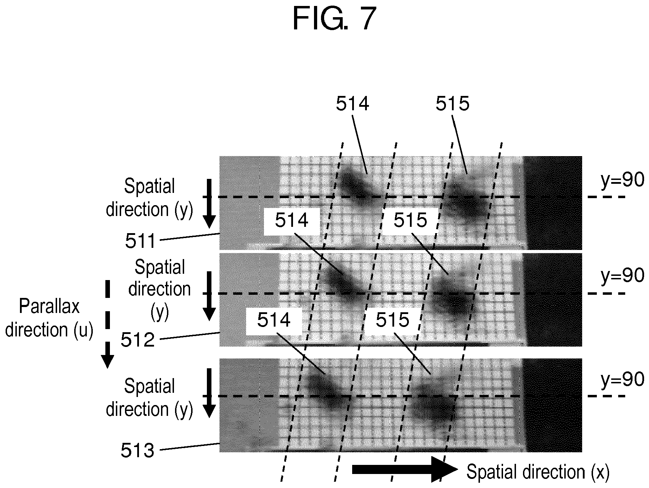

FIG. 7 is a diagram showing a plurality of sub-aperture images arranged in the order of parallax, each corresponding to a part around y-coordinate = 90 of sub-aperture image 500 shown in FIG. 6. FIG. 7 shows, as a typical example, three sub-aperture images 511, 512 and 513 arranged sequentially on a u-axis, or in a parallax direction, among a plurality of sub-aperture images on and around one line at y = 90 of sub-aperture image 500. Dirt 514 and dirt 515 exist in sub-aperture images 511, 512 and 513.

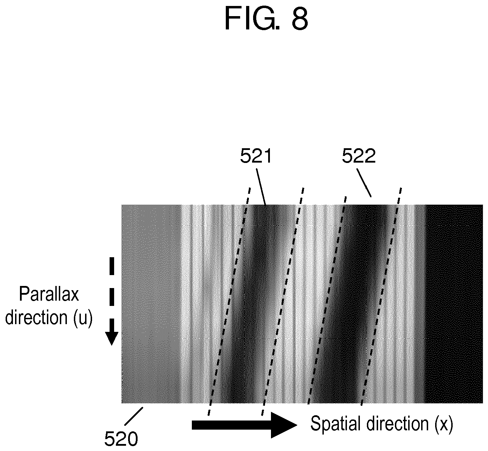

FIG. 8 is a diagram showing an EPI produced from a plurality of sub-aperture images. The x-axis is a spatial direction, and the u-axis is a parallax direction. EPI 520 is an image produced by extracting a plurality of sub-aperture images line by line at a fixed y-coordinate, or y = 90 in this case, and arranging the extracted sub-aperture images vertically in the order of parallax direction. Referring to FIG. 8, inclined regions 521 and 522 are produced.

In the present exemplary embodiment, sub-aperture images are first produced, and then the EPI is produced. However, the EPI may be directly produced from image sensor 104 without producing sub-aperture images. In this case, each corresponding pixel of image sensor 104 that can produce each pixel of the EPI may be previously calculated.

Also, in the present exemplary embodiment, it has been described that the spatial direction is the direction in which the microlenses are arranged, and the parallax direction is the direction in which the relative position in an image sensor to a center of a microlens changes. However, in some cases, the spatial direction and the parallax direction may be reversed to each other by changing the arrangement of image sensor 104. Specifically, in the present exemplary embodiment, the image sensor is disposed on a focal plane of the microlenses. However, the microlenses may be disposed at a position at which the image side focal plane focused by the main lens is photographed in a manner of compound-eye photographing.

1-3-2. Inclination Detection and Dirt Region Detection

Next, description will be made on step S303 of detecting an image inclination of an EPI and step S304 of detecting a dirt region.

When subject 101 is focused and photographed by light-field camera 200, an image of subject 101 located at a focused distance is captured without a parallax. On the other hand, an image of dirt located on or near main lens 102, which is far from the focused distance, is captured with a large parallax.

Since an image of dirt adhered to main lens 102 is captured with a large parallax, dirt 514 and dirt 515, which are adhered to main lens 102, in sub-aperture image 511 exist at locations shifted in the spatial direction by an amount corresponding to the amount of parallax in each of sub-aperture images 512 and 513.

Accordingly, while images of the focused subject 101 align vertically in the parallax direction on EPI 520, dirt 514 and dirt 515 adhered to main lens 102 align along an inclined line as region 521 and region 522 on EPI 520 due to the large parallax.

The inclination of each of regions 521 and 522 on EPI 520 changes depending on the amount of the parallax, or the distance from the position of the focused subject 101 without a parallax. Accordingly, detection of straight lines by the Hough transform or the like may be carried out, and then a region surrounded by straight lines with inclinations equal to or larger than a predetermined threshold value may be detected as a dirt region on or near main lens 102.

For example, EPI 520 may be binarized by pixels each having a strong edge strength, then each pixel with a strong edge strength may be transformed to an (r, •) space, which indicates a length r of a normal line from an origin to a straight line and an angle formed by the normal line relative to a horizontal axis. The thus obtained parameters (r, •) may be voted to determine a parameter (r, •) having a high accumulated value of votes as a straight line on EPI 520.

Next, since the inclination on EPI 520 is determined by the amount of parallax, in a case where an inclination corresponding to the amount of the parallax near main lens 102 is calculated to be 10 degrees from a focus value when subject 101 is focused, region 521 and region 522, which are surrounded by straight lines with an inclination equal to or larger than 10 degrees on EPI 520, may be detected as dirt regions.

The inclinations on the EPI may be obtained by a different method than the Hough transform. For example, the EPI may be divided into regions by luminance or the like, then edges may be detected in each of the divided regions, and inclinations in each region may be obtained from a histogram of the edge inclinations. Method of detecting the inclinations on the EPI may not be limited to these methods.

### 1-3-3. Dirt Removal

Next, the dirt removal in step S305 will be described in detail. Once a dirt region has been detected, the image in the dirt region may be reconstructed by using pixels outside the dirt region.

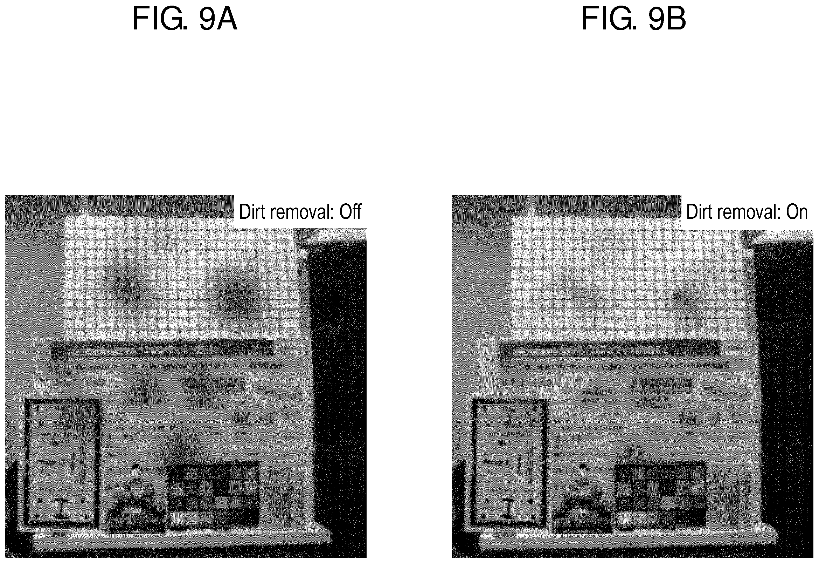

FIG. 9A is a diagram showing an output image in a case where any dirt removal processing is not carried out, and FIG. 9B is a diagram showing a reconstructed image obtained by carrying out a dirt removal processing. It can be seen that an image from which dirt has been removed as shown in FIG. 9B can be reconstructed by the dirt removal processing, compared to the image shown in FIG. 9A that has not been subjected to any dirt removal processing.

In this case, with respect to a region other than regions 521 and 522 in EPI 520 shown in FIG. 8, one line in the spatial direction, or one line along the x-coordinate, that is obtained by adding pixels in the parallax direction, or in the vertical direction, corresponds to one line along the x-coordinate at a certain y-coordinate. Accordingly, lines at the remaining y-coordinates can be obtained by the similar calculation to reconstruct the image.

Also, a case where there is a dirt region extending throughout the vertical direction corresponds to a case where dirt can be seen from any partial space in main lens 102. In this case, the coordinates of the dirt region may be stored by a mask processing or the like, and an image may once be reconstructed by removing a dirt region outside the masked region. Thereafter, pixels in the masked region may be interpolated from pixels in a surrounding region outside the masked region by an image processing such, for example, as an inpainting algorithm. The inpainting algorithm is a process of reconstructing an image in the masked region by using pixels around the border of the masked region, and includes a patch-based method, a method of folding back an image around the border, and a method using Navier-Stokes equations.

### 1-4. Advantageous Effects

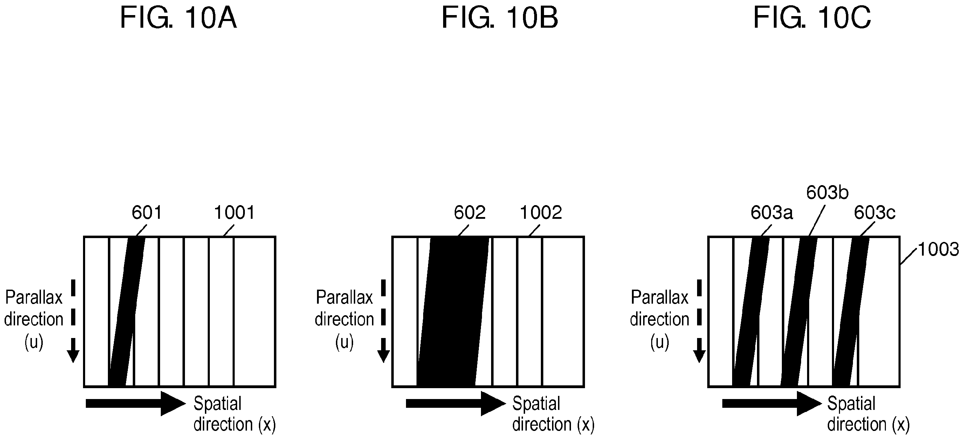

Next, the method of detecting a dirt region based on inclinations of the EPI in accordance with the present exemplary embodiment has been compared to the method disclosed in PTL2 of the Patent Document in which a dirt region is detected by extracting a parallax amount by a position matching using a block matching. FIG. 10A is a diagram showing an example of an EPI containing a narrow dirt region. FIG. 10B is a diagram showing an example of an EPI containing a wide dirt region. FIG. 10C is a diagram showing an example of an EPI containing dirt regions appearing in a repetitive pattern.

Region 601 in EPI 1001 shown in FIG. 10A is a narrow dirt region. Region 602 in EPI 1002 shown in FIG. 10B is a wide dirt region. Regions 603a, 603b and 603c in EPI 1003 shown in FIG. 10C are dirt regions appearing in a repetitive pattern.

In the dirt region detection with light-field camera 200 in accordance with the present exemplary embodiment, an inclination corresponding to an amount of parallax near the main lens is automatically determined from the focal value when a subject is focused, so that regions 601, 602, 603a, 603b and 603c, each of which is surrounded by straight lines having an inclination equal to or larger than a threshold value, can be detected relatively easily, without depending on the size of the dirt region and the repetitive pattern.

In other words, it is possible by the dirt region detection with light-field camera 200 in accordance with the present exemplary embodiment to detect a dirt region regardless of the size of the dirt region of an EPI and the repetition of the dirt region.

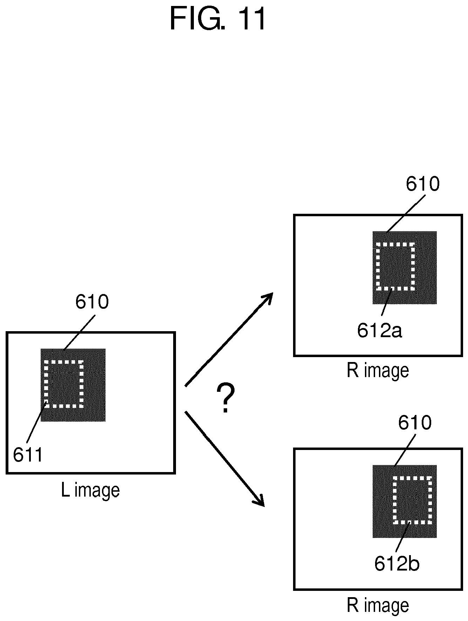

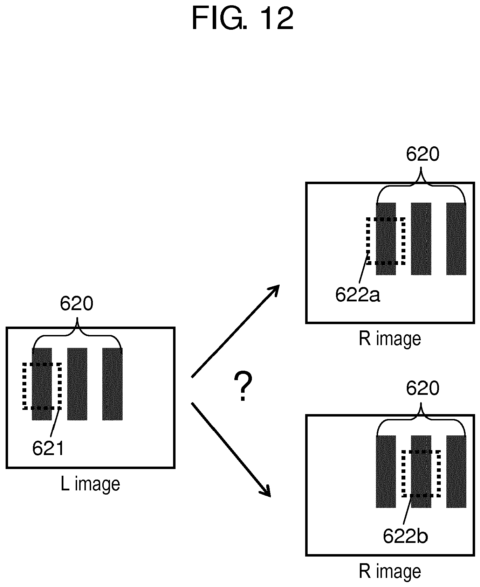

On the other hand, the case disclosed in PTL2, in which a dirt region is detected by extracting an amount of parallax by position matching, will be described with reference to FIG. 11 and FIG. 12 by taking an example of parallax calculation by block matching using an L image and an R image. FIG. 11 is a diagram explaining a case where a dirt region is equal to or larger than a block for calculating a position matching. FIG. 12 is a diagram explaining a case where dirt regions appear in a pattern.

FIG. 11 shows images from two viewpoints in a case where dirt region 610 is larger than block 611 for calculating a block matching. In a case where dirt region 610 in an L image, which is a reference image, is larger than block 611 for calculating a position matching, it cannot be determined which one of block 612a and block 612b in an R image is a block for obtaining a parallax. Consequently, a correct parallax cannot be obtained, so that the dirt region cannot be detected from the amount of parallax.

FIG. 12 shows images from two viewpoints in a case where dirt regions appear in a pattern. As in the case of FIG. 11, in a case where block 621 is a block for calculating a position matching with respect to repetitive dirt regions 620 on an L image, which is a reference image, it cannot be determined which one of block 622a and block 622b in an R image is a block for obtaining a parallax.

As described above, in the case where dirt as shown in FIG. 11 or FIG. 12 exists, the dirt cannot be correctly detected in the position matching method, compared to the dirt detection with light-field camera 200 in accordance with the first exemplary embodiment. Accordingly, the method as disclosed in PTL2, in which a dirt region is detected by extracting the amount of parallax with the position matching, cannot detect dirt, and thus cannot improve image quality.

As described above, an image capture device in accordance with the present embodiment is capable of recording light-ray information composed of a travelling direction of a light ray and an intensity of the light ray in the travelling direction, and includes: a main lens; an image sensor; microlenses arranged between the main lens and the image sensor; a dirt detector that detects a dirt region on or near the main lens based on an inclination of a straight line on an epipolar plane image that is produced by separating pixels on the image sensor so as to correspond to a plurality of sub-apertures existing on the main lens and arranging the separated pixels in a parallax direction; and a dirt remover that reconstructs an image in the dirt region by using pixels outside the dirt region.

With this image capture device, it is possible to produce an image from which dirt on or near the main lens has been removed. Accordingly, when image recognition is performed in an automotive camera or a security camera, it is possible to prevent the reduction in the recognition accuracy due to the dirt on or near the lens.

### INDUSTRIAL APPLICABILITY

The techniques of the present disclosure are applicable to an image capture device that performs photographing by removing dirt on or near the main lens with a light-field camera. Specifically, the image capture device in accordance with the present disclosure is applicable to automotive cameras, security cameras, digital cameras, camcorders, wearable cameras, medical-use cameras such, for example, as endoscopes.

### REFERENCE MARKS IN THE DRAWINGS

100, 200 light-field camera
101 subject
102 main lens
102a, 102b, 102c sub-aperture
103 microlens array
103a, 103b, 103c microlens
104, 104aa, 104ab, 104ac, 104ba, 104bb, 104bc, 104ca, 104cb, 104cc image sensor
210 imaging unit
220 signal processor
221 dirt detector
222 dirt remover
401 EPI
500, 511, 512, 513 sub-aperture image
514, 515 dirt
520 EPI
521, 522, 601, 602, 603a, 603b, 603c region
610, 620 dirt region
611, 612a, 612b, 621, 622a, 622b block
1001, 1002, 1003 EPI

## Claims

1. An image capture device capable of recording light-ray information including a travelling direction of a light ray and an intensity of the light ray in the travelling direction, the image capture device comprising:
a main lens;
an image sensor;
microlenses arranged between the main lens and the image sensor;
a dirt detector that detects a dirt region on or near the main lens based on an inclination of a straight line on an epipolar plane image that is produced by separating pixels on the image sensor so as to correspond to a plurality of sub-apertures existing on the main lens and arranging the separated pixels in a parallax direction; and
a dirt remover that reconstructs an image in the dirt region by using pixels outside the dirt region.

2. The image capture device according to claim 1, wherein the dirt detector calculates the inclination of the straight line by using a Hough transform.

3. The image capture device according to claim 1, wherein the dirt detector divides the epipolar plane image into regions, and calculates the inclination of the straight line from edge information of each of the divided regions.
